# EUROPÄISCHE PATENTSCHRIFT

(11) **EP 2 137 435 B1**
(45) Veröffentlichungstag und Bekanntmachung des Hinweises auf die Patenterteilung: **26.10.2011**
(21) Anmeldenummer: 08706828.4
(22) Anmeldetag: 30.01.2008
(51) Int. Cl.: F16J 9/14, F16J 9/26

(54) **KOLBENRING**
PISTON RING
SEGMENT DE PISTON

(30) Priorität: 17.02.2007 DE 102007007960
(43) Veröffentlichungstag der Anmeldung: 30.12.2009
(73) Patentinhaber: Federal-Mogul Burscheid GmbH, 51399 Burscheid (DE)
(72) Erfinder: ESSER, Johannes, 51519 Odenthal (DE); MÜNCHOW, Frank, 42929 Wermelskirchen (DE)
(74) Vertreter: Döpp, Ludger
(86) Internationale Anmeldenummer: PCT/DE2008/000162
(87) Internationale Veröffentlichungsnummer: WO 2008/098546

(56) Entgegenhaltungen:
- EP-A- 1 136 730
- EP-A1- 0 702 097
- WO-A-2006/125683
- DE-A1- 2 135 338
- US-A- 4 256 318

## Beschreibung

Die Erfindung betrifft einen Kolbenring gemäß gattungsbildendem Teil des ersten Patentanspruchs.

Neben dem Stoßspiel ist die Größe des Stoßkantenbruches von deutlichem Einfluss auf die Menge des durch die Stoßöffnung strömenden Gases. Aus diesem Grund sind die Maße beider Merkmale so gering wie möglich zu halten. Während die Größe des Stoßspieles unter anderem von der Wärmeausdehnung des Kolbenringwerkstoffes und der Prozesssicherheit der Schneidvorgänge abhängt, ist für die Größe des Stoßkantenbruches die Ausbruchsicherheit der Laufflächenbeschichtung bzw. die Rissbildungsneigung der Verschleißschutzschicht von entscheidender Bedeutung.

Unabhängig davon, ob die jeweilige Laufflächenbeschichtung in einem galvanischen oder thermischen Spritzprozess aufgebracht wird, oder ob es sich um eine verschleißfeste Oberflächenschicht handelt, die durch eine Nitrierbehandlung erzeugt wurde, hängt die Ausbruchsicherheit bzw. Neigung zur Rissbildung ganz entscheidend von der Dicke der aufgebrachten bzw. gebildeten Schicht ab.

Hier ist nun ein Zielkonflikt gegeben, da für ausreichenden Verschleißschutz laufflächenseitig eine dickere Schicht benötigt wird, für die Ausbruchsicherheit bzw. geringe Rissbildungsneigung jedoch eine dünnere Schicht vorteilhaft ist.

Die DE 2 135 338 offenbart einen Kolbenring für Kolben von Verbrennungskraftmaschinen aus einem Eisenwerkstoff, dessen Lauffläche mit einer den Verschleiß herabsetzenden Schicht überzogen und dessen kolbenkronenseitige Laufflächenkante verrundet oder angefast ist. Wenigstens die kolbenschaftseitige Laufflächenkante ist zumindest in den an den Stoß grenzenden Bereichen scharfkantig ausgebildet, wobei der übrige Teil in bekannter Weise verrundet oder angefast ist.

In der EP 1 136 730 A2 wird ein Kolbenring beschrieben, mit einer zumindest im Bereich der Lauffläche vorgesehenen Verschleißschutzschicht aus Aluminium und Sauersoff, wobei die Verschleißschutzschicht mit dem PVD oder CVD-Verfahren aufgebracht ist und die Schichtdicke maximal 100 µm, insbesondere 5 bis 50 µm beträgt und eine Härte HV zwischen 1400 und 2000 aufweist.

Die WO 2006/125683 A1 beschreibt einen Kolbenring, der zumindest laufflächenseitig mit einer Schichtstruktur versehen ist, die aus mehreren Verschleißschutzschichten unterschiedlicher Zusammensetzung und Schichtdicke gebildet ist.

Durch die US 4,256,318 ist ein Kolbenring bekannt geworden, der eine im Wesentlichen umlaufende Lauffläche, eine obere und eine untere Flankenfläche, eine innere Umfangsfläche sowie eine, mit einem definiertem Stoßspiel versehene Stoßöffnung aufweist, wobei der Übergang der Laufflächenstoßkante in die jeweilige Stoßfläche scharfkantig ausgebildet ist. Die Lauffläche ist mit einer Kammerung versehen, in welcher eine Molybdänschicht, beispielsweise durch Plasmasprühen, eingebracht ist.

In der EP 0 702 097 A1 wird ein als Kolbenring verwendbarer Gleitkörper beschrieben, der eine Lauffläche aufweist, auf welcher durch einen PVD-Prozess aufgebrachte Verschleißschutzschicht zwischen 1 und 80 µm aufgebracht wurde. Es wird eine bevorzugte Schichtdicke zwischen 35 und 50 µm angegeben.

Der Erfindung liegt die Aufgabe zugrunde, einen Kolbenring dahingehend weiterzubilden, dass zur Vermeidung von Stoßkantenausbrüchen eine andersartige Laufflächenbeschichtung bereitgestellt wird, dies einhergehend mit konstruktiven Änderungen im Bereich der Stoßöffnung.

Diese Aufgabe wird dadurch gelöst, dass ein aus Grau- oder Stahlguss bestehender Grundkörper laufflächenseitig mindestens eine durch Nitrieren erzeugte Verschleißschutzschicht aufweist, auf welche eine PVD-Deckschicht ≤ 10 µm abgeschieden ist,wobei die Lauffläche zumindest bis zur jeweiligen Laufflächenstoßkante unter Bildung einer scharfen Kante mit der PVD-Deckschicht versehen ist, dergestalt, dass eine erhöhte Ausbruchsicherheit der Laufflächenschicht im Stoßbereich gegeben ist.

Vorteilhafte Weiterbildungen des Erfindungsgegenstandes sind den Unteransprüchen zu entnehmen.

Bei der PVD-Beschichtung (Physical Vapour Deposition) handelt es sich um ein Verfahren, bei dem die Beschichtung der Lauffläche des Kolbenringes durch Abscheidung aus der Dampfphase erfolgt. Das abzuscheidende Beschichtungsmaterial liegt dabei als ionisierter Teilchenstorm vor.

Durch das PVD-Verfahren abgeschiedene Deckschichten werden bevorzugt auf Basis von CrN, CrON, TiN, SiN oder SiC ausgebildet, die sehr hart oder somit verschleißarm sind. Aus diesem Grund können derartige Schichten ≤ 10 µm entweder unmittelbar auf dem Grundkörper oder aber mindestens einer darauf aufgebrachten Verschleißschutzschicht abgeschieden werden.

Hiermit geht als weiterer Vorteil ein, dass auch die jeweilige Verschleißschutzschicht von ihrer Dicke her geringer als bisher gehalten werden kann, wobei bevorzugte Dicken ≤ 15 µm, insbesondere 5 bis 10 µm, angestrebt werden.

Infolge der gering dimensionierten PVD-Deckschicht ist es nun möglich, sehr scharfe Kanten an den Stoßenden des Kolbenringes auszubilden, so dass der Stoßkantenausbruch im Gegensatz zum bisherigen Stand der Technik wesentlich reduziert werden kann, dergestalt, dass eine erhöhte Ausbruchsicherheit der Laufflächenschicht, insbesondere im kritischen Stoßbereich, gegeben ist.

Durch die erfindungsgemäßen Maßnahmen wird der eingangs angesprochene Zielkonflikt überwunden, da PVD-Deckschichten allein oder als Deckschicht auf sehr dünnen galvanischen, thermischen oder durch Nitrieren erzeugten Verschleißschutzschichten, selbst bei sehr geringer Dicke, einen für die Beanspruchung in modernen Brennkraftmaschinen ausreichenden Verschleißschutz gewährleisten.

Einem weiteren Gedanken der Erfindung gemäß kann die PVD-Deckschicht auf Basis von Nitriden der Elemente der Gruppen IV b bis VI b des Periodensystems erzeugt werden. Dies kann wahlweise mit bzw. ohne Zusatz der Elemente Al und/oder Si und/oder C und/oder O erfolgen.

Von besonderem Vorteil sind so genannte DLC (diamond-like-carbon)-Beschichtungen, die auf die Lauffläche von Kolbenringen im PVD-Verfahren aufgebracht werden. Sie bilden besonders verschleißfeste Oberflächen mit niedrigem Reibungskoeffizienten. DLC-Schichten weisen darüber hinaus eine gute Haftung auf dem Grundkörper und eine hohe Bruchfestigkeit auf

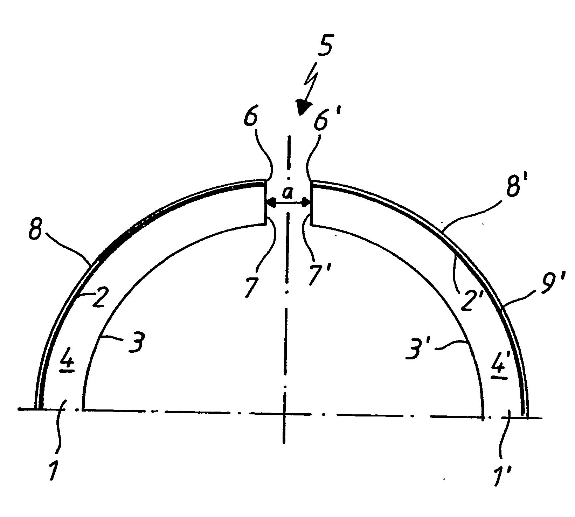

Der Erfindungsgegenstand ist anhand eines Ausführungsbeispiels in der Zeichnung dargestellt und wird wie folgt beschrieben.

Die einzige Figur zeigt in der Draufsicht zwei angedeutete Kolbenringhälften eines aus Stahl, Stahl- oder Grauguss bestehenden Kolbenringes 1,1'. Erkennbar ist die Lauffläche 2,2', die innere Umfangsfläche 3,3', die obere Flankenfläche 4,4' sowie eine Stoßöffnung 5 mit definiertem Stoßspiel a. Der Übergang der Laufflächenstoßkante 6,6' in die Stoßfläche 7,7' ist als scharfe Kante ausgebildet.

Der Kolbenring 1 ist in diesem Beispiel lediglich mit einer PVD-Deckschicht 8 versehen, die auf Basis von CrN ausgebildet ist und eine Schichtdicke von 10 µm aufweist. Andere Materialien, wie z.B. CrON, sind ebenfalls denkbar, wobei der Fachmann die geeignete Werkstoffauswahl in Abhängigkeit vom Anwendungsfall vornehmen wird.

Der Kolbenring 1' weist auf seiner Lauffläche 2' eine Verschleißschutzschicht 9' auf, auf welcher eine PVD-Deckschicht 8' abgeschieden ist. Die Verschleißschutzschicht 9' soll in diesem Beispiel eine Nitrierschicht mit einer Dicke von 30 µm sein, während die PVD-Deckschicht 8' auf Basis von CrON ausgebildet ist. Die PVD-Deckschicht 8' hat in diesem Beispiel eine Schichtdicke von 8 µm. Auch hier sind - wie zuvor angesprochen - alternative PVD-Deckschichten denkbar. Gleiches gilt auch für die Verschleißschutzschicht 9', die bedarfsweise galvanisch oder thermisch auf die Lauffläche 2' aufgebracht werden kann.

Die Kombination der scharfkantig ausgebildeten Laufflächenstoßkante 6,6' in Verbindung mit der dünnen PVD-Deckschicht 8,8' allein oder in Verbindung mit der ebenfalls gering dimensionierten Verschleißschutzschicht 9' macht es nun möglich, die Größe des Stoßkantenbruches in diesem Bereich zu minimieren bzw. vollkommen auszuschließen, so dass die Ausbruchsicherheit der PVD-Deckschicht 8,8' bzw. die Rissbildungsneigung der Verschleißschutzschicht 9' gegenüber bisher zum Einsatz gebrachten Verschleißschutzschichten erhöht wird.

## Patentansprüche

1. Kolbenring, mit einem Grundkörper, der eine im Wesentlichen umlaufende Lauffläche (2,2'), eine obere und eine untere Flankenfläche (4,4'), eine innere Umfangsfläche (3,3') sowie eine, mit einem definierten Stoßspiel (a) versehene, Stoßöffnung (5) aufweist, wobei der Übergang der Laufflächenstoßkante (6,6') in die jeweilige Stoßfläche (7,7') scharfkantig ausgebildet ist, wobei der Grundkörper aus Grau-oder Stahlguss besteht, gekennzeichnet, dass der Grundkörper laufflächenseitig mindestens eine durch Nitrieren erzeugte Verschleißschutzschicht (9`) aufweist, auf welche eine PVD-Deckschicht (8') ≤ 10 µm abgeschieden ist,wobei die Lauffläche (2,2') zumindest bis zur jeweiligen Laufflächenstoßkante (6,6') unter Bildung einer scharfen Kante mit der PVD-Deckschicht (8,8') versehen ist, dergestalt, dass eine erhöhte Ausbruchsicherheit der Laufflächenschicht im Stoßbereich gegeben ist.

2. Kolbenring nach Anspruch 1, **dadurch gekennzeichnet, dass** die PVD-Deckschicht (8,8') auf Basis von CrN und/oder CrON, ausgebildet ist.

3. Kolbenring nach Anspruch 1, **dadurch gekennzeichnet, dass** die PVD-Deckschicht (8,8') auf Basis von Nitriden der Elemente der Gruppen IV b bis VI b des Periodensystems mit oder ohne Zusatz von Al und/oder Si und/oder C und/oder O besteht.

4. Kolbenring nach einem der Ansprüche 1 bis 3, **dadurch gekennzeichnet, dass** die PVD-Deckschicht (8,8') als reibungs- und verschleißarme PVD-DLC (diamond-like-carbon)-Schicht ausgebildet ist.

5. Kolbenring nach einem der Ansprüche 1 bis 4, **dadurch gekennzeichnet, dass** die PVD-Deckschicht (8,8') eine Schichtdicke von 0,5 bis 8 µm aufweist.

6. Kolbenring nach einem der Ansprüche 1 bis 5, **dadurch gekennzeichnet, dass** die Verschleißschutzschicht (9') eine Dicke ≤ 30 µm aufweist.

## Claims

1. A piston ring having a base body which comprises an essentially surrounding bearing surface (2, 2'), upper and a lower flank surfaces (4, 4'), an inner circumferential surface (3, 3') as well as a piston ring joint (5) provided with a defined joint play (a), wherein the transition from the bearing surface bordering (6, 6') into the respective joint surface (7,7') forms a feather edge, **characterized in that** a base body made of gray cast iron or cast iron comprises at least one protection layer (9') against wear created by nitration on the bearing surface side, a PVD-cover layer (8') of ≤ 10 µm being deposited on said protection layer (9') against wear, wherein the bearing surface (2, 2') is provided with the PVD-cover layer (8, 8') at least until the respective bearing surface bordering (6, 6') while forming a feather edge, such that an increased security against fracture of the bearing surface layer is achieved in the joint area.

2. A piston ring according to claim 1, **characterized in that** the PVD-cover layer (8, 8') is formed on the base of CrN and/or CrON.

3. A piston ring according to claim 1, **characterized in that** the PVD-cover layer (8, 8') is formed on the base of nitrides of the elements belonging to the groups IV through VI of the classification of elements with or without addition of Al and/or Si and/or C and/or O.

4. A piston ring according to one of the claims 1 through 3, **characterized in that** the PVD-cover layer (8, 8') is a PVD-diamond-like-carbon layer with low friction and low wear.

5. A piston ring according to one of the claims 1 through 4, **characterized in that** the PVD-cover layer (8, 8') comprises a layer thickness comprised between 0.5 and 8 µm.

6. A piston ring according to one of the claims 1 through 5, **characterized in that** the protection layer (9') against wear comprises a thickness of ≤ 30 µm.

## Revendications

1. Segment de piston ayant un corps de base qui comprend une surface de roulement (2, 2') essentiellement entourante, une surface de flanc supérieure et inférieure (4, 4'), une surface circonférentielle intérieure (3, 3') ainsi qu'une ouverture de coupure (5) munie d'un jeu de coupure (a) défini, la transition du rebord de surface de roulement (6, 6') à la surface de coupure respective (7, 7') formant une arête vive, **caractérisé en ce qu'**un corps de base composé de fonte grise ou d'acier moulé comprend du côté de la surface de roulement au moins une couche de résistance à l'usure (9') créée par nitrification sur laquelle est déposée une couche de recouvrement en PVD (8') de ≤ 10 µm, la surface de roulement (2, 2') étant munie de la couche de recouvrement en PVD (8, 8') au moins jusqu'au rebord respectif de la surface de roulement (6, 6') en formant une arête vive, de sorte qu'on obtient une sécurité augmentée contre la brisure de la couche de surface de roulement dans la zone de coupure.

2. Segment de piston selon la revendication 1, **caractérisé en ce que** la couche de recouvrement en PVD (8, 8') est formée à base de CrN et/ou de CrON.

3. Segment de piston selon la revendication 1, **caractérisé en ce que** la couche de recouvrement en PVD (8, 8') est formée à base de nitrures des éléments des groupes IV b à VI b de la classification périodique des éléments avec ou sans addition de Al et/ou de Si et/ou de C et/ou de O.

4. Segment de piston selon l'une des revendications 1 à 3, **caractérisé en ce que** la couche de recouvrement en PVD (8, 8') est une couche en PVD et en DLC (diamond-like-carbon) à faible friction et à faible usure.

5. Segment de piston selon l'une des revendications 1 à 4, **caractérisé en ce que** la couche de recouvrement en PVD (8, 8') présente une épaisseur de couche comprise entre 0,5 et 8 µm.

6. Segment de piston selon l'une des revendications 1 à 5, **caractérisé en ce que** la couche de résistance à l'usure (9') présente une épaisseur de ≤ 30 µm.
